# EUROPEAN PATENT APPLICATION

(11) **EP 4 841 320 A1**
(43) Date of publication of application: **18.11.2026**
(21) Application number: 24916876.6
(22) Date of filing: 18.12.2024
(51) Int. Cl.: G02B 6/40

(54) **HOLDING MEMBER, OPTICAL FIBER CONNECTION COMPONENT, OPTICAL CONNECTOR, CONNECTION ASSEMBLY, AND METHOD FOR MANUFACTURING OPTICAL FIBER CONNECTION COMPONENT**

(30) Priority: 09.01.2024 JP 2024001045
(71) Applicant: Sumitomo Electric Industries, Ltd., Osaka-shi, Osaka 541-0041 (JP)
(72) Inventor: MORISHIMA Tetsu, Osaka-shi, Osaka 541-0041 (JP)
(74) Representative: TBK
(86) International application number: PCT/JP2024/044850
(87) International publication number: WO 2025/150374

(57) **Abstract**

A holding member (10) comprises a front wall face (10a), a rear wall face (10b), a plurality of insertion holes (11), a first side wall face (10c), a second side wall face (10f), and marks (15). The rear wall face (10b) is aligned with the front wall face (10a) along a first direction (X direction) which intersects the front wall face. The plurality of insertion holes (11) extend along the first direction (X direction) between the front wall face and the rear wall face and are aligned along a second direction (Y direction) which intersects the first direction. The plurality of insertion holes are capable of allowing a plurality of optical fibers to be inserted thereto. The first side wall face (10c) is disposed between the front wall face and the rear wall face, and intersects a third direction (Z direction) which intersects both the first direction and the second direction. The second side wall face (10f) is disposed between the front wall face and the rear wall face, and intersects the second direction (Y direction). The marks are formed on at least one of the first side wall face (10c) and the second side wall face (10f), and indicate respective positions of the plurality of insertion holes (11).

## Description

### TECHNICAL FIELD

The present disclosure relates to a holding member, an optical fiber connection component, an optical connector, a connection assembly, and a method for manufacturing an optical fiber connection component. This application claims priority based on Japanese Patent Application No. 2024-001045 filed on January 9, 2024, the entire contents of which are incorporated herein by reference.

### BACKGROUND ART

Conventionally, as a holding member for holding a plurality of optical fibers, for example, a hole array described in Patent Literature 1 is known. The hole array has a plurality of insertion holes into which the plurality of optical fibers can be respectively inserted. The plurality of optical fibers are inserted into the inside of an optical connector ferrule in a state in which the plurality of optical fibers are respectively inserted into and held in the plurality of insertion holes of the hole array.

### CITATION LIST

### PATENT LITERATURE

Patent Literature 1: WO 2018/135368

### SUMMARY OF INVENTION

A holding member according to an embodiment of the present disclosure is a holding member configured to be disposed, in a state of holding a plurality of optical fibers, inside an optical connector ferrule. The holding member includes a front wall surface, a rear wall surface aligned with the front wall surface along a first direction intersecting the front wall surface, a plurality of insertion holes extending along the first direction between the front wall surface and the rear wall surface and arranged along a second direction intersecting the first direction such that each of the plurality of optical fibers is insertable into a respective one of the plurality of insertion holes, a first side wall surface positioned between the front wall surface and the rear wall surface and intersecting a third direction, the third direction intersecting both the first direction and the second direction, a second side wall surface positioned between the front wall surface and the rear wall surface and intersecting the second direction, and at least one mark formed at at least one of the first side wall surface and the second side wall surface and configured to indicate the position of each of the plurality of insertion holes.

### BRIEF DESCRIPTION OF THE DRAWINGS

[FIG. 1] FIG. 1 is a perspective view of a holding member according to an embodiment.
[FIG. 2] FIG. 2 is a plan view showing the holding member of FIG. 1.
[FIG. 3] FIG. 3 is a plan view showing an optical fiber connection component including the holding member of FIG. 1.
[FIG. 4] FIG. 4 is a front view showing a distal end surface of an optical fiber included in the optical fiber connection component of FIG. 3.
[FIG. 5A] FIG. 5A is a plan view showing a manufacturing process of the optical fiber connection component of FIG. 3.
[FIG. 5B] FIG. 5B is a plan view showing a manufacturing process of the optical fiber connection component of FIG. 3.
[FIG. 6] FIG. 6 is an exploded perspective view showing an optical connector including the optical fiber connection component of FIG. 3.
[FIG. 7] FIG. 7 is a perspective view of the optical connector of FIG. 6.
[FIG. 8] FIG. 8 is a perspective view showing a connection assembly including the optical connector of FIG. 7.
[FIG. 9] FIG. 9 is a perspective view showing a holding member according to Modification 1.
[FIG. 10] FIG. 10 is a plan view showing the holding member of FIG. 9.
[FIG. 11] FIG. 11 is a perspective view showing a holding member according to Modification 2.
[FIG. 12] FIG. 12 is a plan view showing the holding member of FIG. 11.
[FIG. 13] FIG. 13 is a side view showing the holding member of FIG. 11.
[FIG. 14] FIG. 14 is a perspective view showing a holding member according to Modification 3.
[FIG. 15] FIG. 15 is a plan view showing the holding member of FIG. 14.
[FIG. 16] FIG. 16 is a side view showing the holding member of FIG. 14.

### DETAILED DESCRIPTION

### [Problems to be Solved by Present Disclosure]

When optical fibers are mounted to the hole array described in Patent Literature 1, it is conceivable to directly observe the position of an insertion hole of the hole array in order to identify the position of the insertion hole into which an optical fiber is to be inserted. However, at a position facing the insertion hole of the hole array, an obstacle such as a hand of an operator or a jig gripping the optical fiber may be present. Thus, it is difficult to directly observe the position of the insertion hole of the hole array because of such an obstacle. In this case, the position of the insertion hole of the hole array cannot be efficiently identified, and it may take time to mount the optical fiber to the hole array.

The present disclosure provides a holding member, an optical fiber connection component, an optical connector, a connection assembly, and a method for manufacturing an optical fiber connection component, which allow an optical fiber to be easily mounted.

### [Advantageous Effects of Present Disclosure]

According to the holding member, the optical fiber connection component, the optical connector, the connection assembly, and the method for manufacturing an optical fiber connection component according to the present disclosure, the optical fiber can be easily mounted.

### [Description of Embodiments of Present Disclosure]

First, the contents of the embodiments of the present disclosure will be listed and described.
(1) A holding member according to an embodiment of the present disclosure is a holding member configured to be disposed, in a state of holding a plurality of optical fibers, inside an optical connector ferrule. The holding member includes a front wall surface, a rear wall surface aligned with the front wall surface along a first direction intersecting the front wall surface, a plurality of insertion holes extending along the first direction between the front wall surface and the rear wall surface and arranged along a second direction intersecting the first direction such that each of the plurality of optical fibers is insertable into a respective one of the plurality of insertion holes, a first side wall surface positioned between the front wall surface and the rear wall surface and intersecting a third direction, the third direction intersecting both the first direction and the second direction, a second side wall surface positioned between the front wall surface and the rear wall surface and intersecting the second direction, and at least one mark formed at at least one of the first side wall surface and the second side wall surface and configured to indicate the position of each of the plurality of insertion holes.
   The holding member described above includes the at least one mark formed at at least one of the first side wall surface or the second side wall surface and configured to indicate the position of each of the plurality of insertion holes. For example, at a position facing the front wall surface or the rear wall surface in which the insertion holes are formed, an obstacle such as a hand of an operator or a jig gripping each of the optical fibers may be present. Thus, it is difficult to directly observe the position of each of the insertion holes from the front wall surface or the rear wall surface because of such an obstacle. From at least one of the first side wall surface or the second side wall surface where such an obstacle is not present, the mark indicating the position of each of the insertion holes can be easily observed. Thus, when the plurality of optical fibers are mounted to the holding member described above, the position of each of the plurality of insertion holes can be easily identified using the mark by detecting the mark from an observation result of at least one of the first side wall surface or the second side wall surface. As a result, the position of each of the optical fibers can be precisely matched with the position of a respective one of the insertion holes, and thus each of the optical fibers can be easily inserted into the respective one of the insertion holes. Thus, according to the holding member described above, the optical fibers can be easily mounted to the holding member.
(2) In the holding member according to the above (1), the at least one mark may include a first mark formed at the first side wall surface and a second mark formed at the second side wall surface. In this case, the position of each of the insertion holes can be identified with high accuracy using position information of each of the insertion holes obtained from an observation result of the first side wall surface using the first mark and position information of each of the insertion holes obtained from an observation result of the second side wall surface using the second mark.
(3) In the holding member according to the above (1) or (2), the at least one mark may include one or a plurality of grooves formed at at least one of the first side wall surface or the second side wall surface. In this case, from the observation result of at least one of the first side wall surface or the second side wall surface, the position of each of the insertion holes can be easily identified based on a positional relationship between the one or a plurality of grooves and the plurality of insertion holes.
(4) In the holding member according to the above (3), the first side wall surface may include a first surface connected to the front wall surface, and a second surface connecting the first surface and the rear wall surface to each other and forming a recess at the first side wall surface. The plurality of insertion holes may extend along the first direction from a wall surface connecting the first surface and the second surface to each other to the rear wall surface. The plurality of grooves may be formed at the second surface. Each of the plurality of grooves may extend along the first direction on an extension line of the respective one of the plurality of insertion holes, and may communicate with the respective one of the plurality of insertion holes. The plurality of grooves may be arranged along the second direction. In this case, from the observation result of the first side wall surface, the position of each of the insertion holes in the first direction and the second direction can be easily identified using a respective one of the grooves formed at the first side wall surface. Thus, the position of each of the optical fibers in the first direction and the second direction can be precisely matched with the position of a respective one of the insertion holes in the first direction and the second direction. Further, by placing each of the optical fibers in a respective one of the grooves, the position of each of the optical fibers in the third direction can be aligned with the position of a respective one of the insertion holes in the third direction. As a result, the position of each of the optical fibers can be precisely matched with the position of a respective one of the insertion holes using the observation result of the first side wall surface, and thus each of the optical fibers can be easily inserted into the respective one of the insertion holes. Further, by placing each of the optical fibers along a respective one of the grooves, the posture of each of the optical fibers can be adjusted, so that each of the optical fibers can be smoothly inserted into a respective one of the insertion holes.
(5) In the holding member according to the above (3), the plurality of grooves may include a plurality of first grooves formed at the first side wall surface. Each of the plurality of first grooves may extend along the first direction to be aligned with a center axis of a respective one of the plurality of insertion holes along the third direction. The plurality of first grooves may be arranged along the second direction. In this case, from the observation result of the first side wall surface, the position of each of the insertion holes in the first direction and the second direction can be identified using a respective one of the first grooves formed at the first side wall surface. Thus, the position of each of the optical fibers in the first direction and the second direction can be precisely matched with the position of a respective one of the insertion holes in the first direction and the second direction, and thus each of the optical fibers can be easily inserted into the respective one of the insertion holes.
(6) In the holding member according to any one of the above (3) to (5), the plurality of grooves may include one second groove formed at the second side wall surface. The second groove may extend along the first direction to be aligned with a center axis of each of the plurality of insertion holes along the second direction. In this case, from the observation result of the second side wall surface, the position of each of the insertion holes in the first direction and the third direction can be easily identified using the second groove formed at the second side wall surface. Thus, the position of each of the optical fibers in the first direction and the third direction can be precisely matched with the position of a respective one of the insertion holes in the first direction and the third direction, and thus each of the optical fibers can be easily inserted into the respective one of the insertion holes.
(7) In the holding member according to any one of the above (1) to (6), the at least one mark may include one or a plurality of through holes formed at at least one of the first side wall surface or the second side wall surface and communicating with the plurality of insertion holes. In this case, from the observation result of at least one of the first side wall surface or the second side wall surface, the position of each of the insertion holes can be easily identified based on a positional relationship between the one or a plurality of through holes and the plurality of insertion holes.
(8) In the holding member according to the above (7), the plurality of through holes may be formed at the first side wall surface and may be arranged along the second direction such that each of the plurality of through holes communicates with a respective one of the plurality of insertion holes. Each of the plurality of through holes may be aligned with a center axis of a respective one of the plurality of insertion holes along the third direction. In this case, from the observation result of the first side wall surface, the position of each of the insertion holes in the first direction and the second direction can be identified through a respective one of the through holes formed at the first side wall surface. Thus, the position of each of the optical fibers in the first direction and the second direction can be precisely matched with the position of a respective one of the insertion holes in the first direction and the second direction, and thus each of the optical fibers can be easily inserted into the respective one of the insertion holes.
(9) In the holding member according to the above (8), the plurality of through holes may include a plurality of first through holes arranged in a single row along the second direction, and a plurality of second through holes arranged in a single row along the second direction at positions shifted from the plurality of first through holes in the first direction such that the plurality of second through holes are staggered with respect to the plurality of first through holes. In this case, as compared with the case where all the through holes are formed to be arranged in a single row along the second direction, it is possible to avoid intervals between the through holes from becoming excessively narrow, and thus it is possible to reduce the risk of a decrease in mechanical strength of wall portions between the through holes.
(10) An optical fiber connection component according to an embodiment of the present disclosure includes the holding member according to any one of the above (1) to (9), and the plurality of optical fibers each of which is inserted into a respective one of the plurality of insertion holes. Since the optical fiber connection component includes the holding member according to any one of the above (1) to (9), as described above, the optical fibers can be easily mounted to the holding member.
(11) An optical connector according to an embodiment of the present disclosure includes the optical fiber connection component according to the above (10), and the optical connector ferrule into which the optical fiber connection component is inserted. Since the optical fiber connection component includes the optical fiber connection component according to the above (10), the optical fibers can be easily mounted to the holding member as described above.
(12) A connection assembly according to an embodiment of the present disclosure includes a first optical connector and a second optical connector, each as the optical connector according to the above (11). The first optical connector and the second optical connector are arranged to face each other along the first direction. Since the connection assembly includes the first optical connector and the second optical connector each as the optical connector described above, the optical fibers can be easily mounted to the holding member as described above.
(13) A method for manufacturing an optical fiber connection component according to an embodiment of the present disclosure is a method for manufacturing the optical fiber connection component according to the above (10). The method includes identifying a position of each of the plurality of insertion holes by observing at least one of the first side wall surface or the second side wall surface of the holding member and by using the at least one mark, and inserting each of the plurality of optical fibers into a respective one of the plurality of insertion holes based on an identified position of each of the plurality of insertion holes. In this case, since each of the optical fibers can be easily inserted into a respective one of the insertion holes based on the position of the respective one of the insertion holes identified using the mark, the optical fibers can be easily mounted to the holding member as described above.

### [Details of Embodiments of Present Disclosure]

Specific examples of a holding member, an optical fiber connection component, an optical connector, a connection assembly, and a method for manufacturing an optical fiber connection component according to embodiments of the present disclosure will be described below with reference to the drawings. The present invention is not limited to these examples, but is defined by the scope of the claims, and is intended to include all modifications within the meaning and scope equivalent to the scope of the claims. In the following description, the same elements are denoted by the same reference numerals in the description of the drawings, and redundant description will be omitted as appropriate.

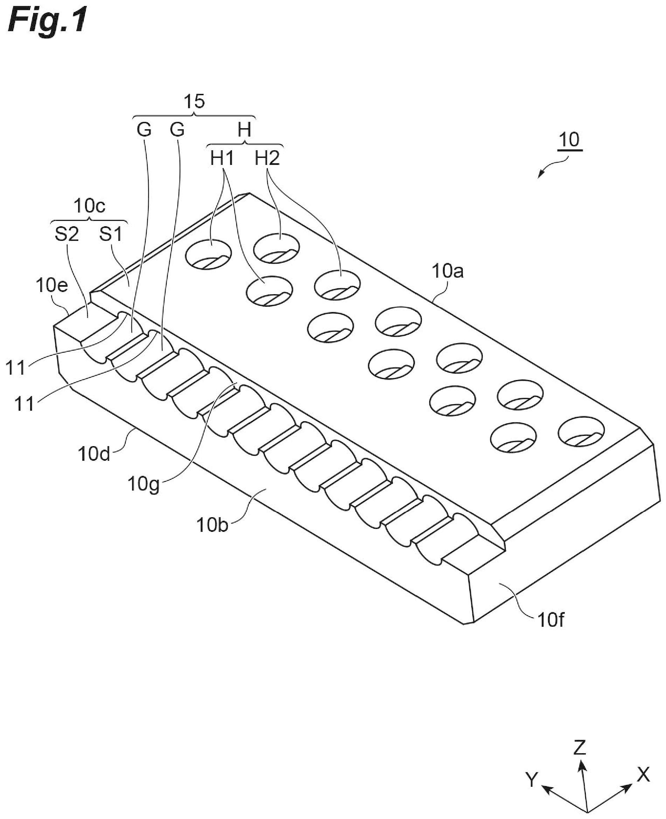

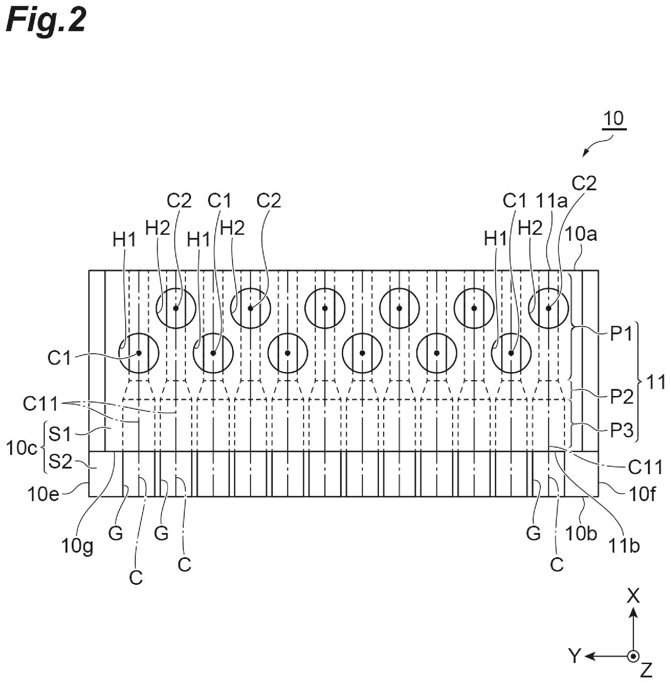

FIG. 1 is a perspective view of a holding member 10 according to the embodiment. FIG. 2 is a plan view of the holding member 10. In each figure, an XYZ orthogonal coordinate system is shown. The holding member 10 has a substantially rectangular parallelepiped appearance with, for example, a Y direction (second direction) as a longitudinal direction, an X direction (first direction) as a lateral direction, and a Z direction (third direction) as a thickness direction. In the following description, "up and down" may be defined by a relative position of a Z coordinate, "front and rear" may be defined by a relative position of an X coordinate, and "left and right" may be defined by a relative position of a Y coordinate. A larger Z coordinate represents "up". A larger X coordinate represents "front". The larger Y coordinate represents "right".

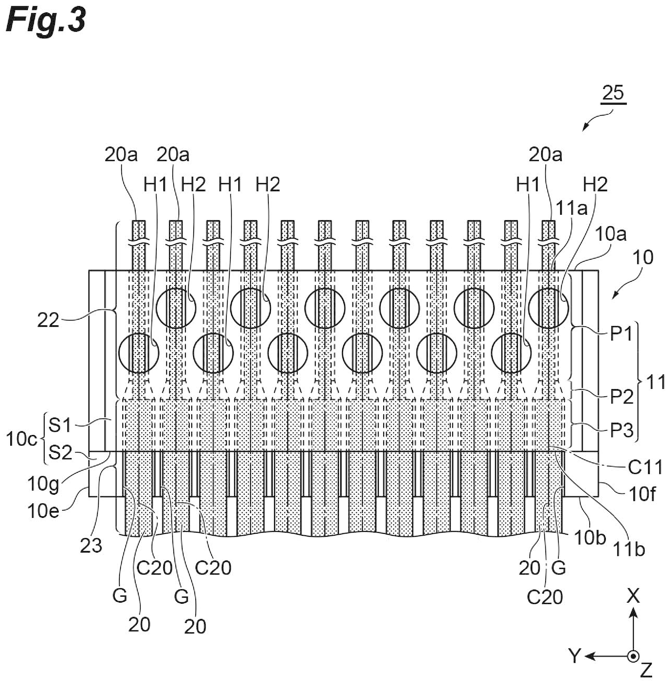

The holding member 10 is a member that holds a plurality of optical fibers 20 (see FIG. 3 described below). The holding member 10 is formed of, for example, a material such as a resin or quartz glass that is capable of transmitting ultraviolet light used to cure an ultraviolet-curable adhesive. Capable of transmitting ultraviolet light means that a material with a thickness of 3 mm has a transmittance of 40% or more for light having a wavelength of 360 nm to 410 nm. In this case, the holding member 10 can be manufactured at low cost and with high accuracy. The holding member 10 may be formed of, for example, metal. In this case, the holding member 10 can be manufactured with higher accuracy. When the holding member 10 is formed of quartz glass or metal, frictional resistance between the holding member 10 and the plurality of optical fibers 20 can be reduced.

As shown in FIG. 1, the holding member 10 includes, for example, a front wall surface 10a, a rear wall surface 10b, and four side wall surfaces 10c, 10d, 10e, and 10f. The front wall surface 10a is located at a front end of the holding member 10 in the X direction. The rear wall surface 10b is located at a rear end of the holding member 10 in the X direction. The front wall surface 10a and the rear wall surface 10b are arranged along the X direction to face in opposite directions. The front wall surface 10a and the rear wall surface 10b each extend along, for example, a YZ plane perpendicular to the X direction, and are arranged parallel to each other along the X direction.

The side wall surface 10c (first side wall surface) and the side wall surface 10d are positioned between the front wall surface 10a and the rear wall surface 10b and are arranged along the Z direction to face in opposite directions. The side wall surfaces 10c and 10d each extend along, for example, an XY plane perpendicular to the Z direction, and are arranged parallel to each other along the Z direction. Each of the side wall surfaces 10c and 10d may be perpendicular with respect to the front wall surface 10a and the rear wall surface 10b, for example. The side wall surface 10e and the side wall surface 10f (second side wall surface) are positioned between the front wall surface 10a and the rear wall surface 10b, and are arranged along the Y direction to face in opposite directions. The side wall surfaces 10e and 10f each extend along, for example, an XZ plane perpendicular to the Y direction, and are arranged parallel to each other along the Y direction. Each of the side wall surfaces 10e and 10f may be perpendicular with respect to the front wall surface 10a, the rear wall surface 10b, the side wall surface 10c, and the side wall surface 10d.

The side wall surface 10c includes, for example, a first surface S1 and a second surface S2. The first surface S1 and the second surface S2 are arranged in order along the X direction between the front wall surface 10a and the rear wall surface 10b. The first surface S1 is connected to the front wall surface 10a and extends from the front wall surface 10a toward the rear wall surface 10b along the X direction. The second surface S2 is recessed along the Z direction with respect to the first surface S1, and is connected to the first surface S1 via a wall surface 10g. The second surface S2 extends from the wall surface 10g to the rear wall surface 10b along the X direction. The wall surface 10g is a connecting surface that connects the first surface S1 to the second surface S2 that forms a recess with respect to the first surface S1 along the Z direction. The wall surface 10g extends, for example, along the YZ plane intersecting the X direction, and is perpendicular with respect to the first surface S1 and the second surface S2.

The holding member 10 includes a plurality of insertion holes 11 that penetrate along the X direction from the wall surface 10g to the rear wall surface 10b inside the holding member 10. The insertion holes 11 each extend along the X direction and are arranged in a single row along the Y direction, for example. Each of the insertion holes 11 is formed, for example, at a position closer to the side wall surface 10c than to the side wall surface 10d in the Z direction. As shown in FIG. 2, each of the insertion holes 11 penetrates from the wall surface 10g to the rear wall surface 10b along the X direction, and opens at the wall surface 10g and at the rear wall surface 10b. A shape of each of the insertion holes 11 as viewed along the X direction is, for example, a circular shape centered on a center axis C11.

As shown in FIG. 2, the wall surface 10g is provided with openings 11a that are first ends of the plurality of insertion holes 11. The rear wall surface 10b is provided with openings 11b that are second ends of the plurality of insertion holes 11. An inner diameter of each of the openings 11b is, for example, larger than an inner diameter of a respective one of the openings 11a. The openings 11a and 11b are each arranged in a single row along the Y direction, each corresponding to a respective one of the insertion holes 11. In the embodiment, a case where twelve insertion holes 11 are arranged in a single row (12 × 1 row) at equal intervals along the Y direction is illustrated. However, the number of insertion holes 11 is not limited to twelve, and may be four, eight, or sixteen. The insertion holes 11 do not need to be arranged in a single row, and may be arranged in two or more rows.

Each of the insertion holes 11 includes, for example, a small-diameter portion P1, a diameter-increasing portion P2, and a large-diameter portion P3. The small-diameter portion P1 linearly extends along the X direction from the wall surface 10g toward the rear wall surface 10b. The small-diameter portion P1 has an inner diameter into which a coating-removed portion 22 (see FIG. 3) of the optical fiber 20, described below, is insertable. The small-diameter portion P1 is formed to rotatably hold the coating-removed portion 22 around a center axis C20 of the optical fiber 20. The small-diameter portion P1 being formed to rotatably hold the coating-removed portion 22 around the center axis C20 means that the inner diameter of the small-diameter portion P1 is set to be large enough to allow rotation of the coating-removed portion 22 around the center axis C20 and small enough to define a position of the coating-removed portion 22 in the YZ plane. The inner diameter of the small-diameter portion P1 is constant at each position along the X direction of the small-diameter portion P1.

The large-diameter portion P3 is located between the small-diameter portion P1 and the rear wall surface 10b along the X direction. The large-diameter portion P3 linearly extends along the X direction toward the rear wall surface 10b. The large-diameter portion P3 has an inner diameter into which a coated portion 23 (see FIG. 3) of the optical fiber 20, described below, is insertable. The large-diameter portion P3 is formed to rotatably hold the coated portion 23 around the center axis C20. Thus, the inner diameter of the large-diameter portion P3 is set to be large enough to allow rotation of the coated portion 23 around the center axis C20 and small enough to define a position of the coated portion 23 in the YZ plane. The inner diameter of the large-diameter portion P3 is constant at each position along the X direction.

The diameter-increasing portion P2 is located between the small-diameter portion P1 and the large-diameter portion P3 in the X direction, and connects the small-diameter portion P1 and the large-diameter portion P3 to each other. An inner diameter of the diameter-increasing portion P2 gradually increases from the small-diameter portion P1 toward the large-diameter portion P3 along the X direction. The diameter-increasing portion P2 guides the coating-removed portion 22 of the optical fiber 20 inserted from the large-diameter portion P3 to the small-diameter portion P1. Each of the insertion holes 11 does not necessarily need to include both the small-diameter portion P1 and the large-diameter portion P3. Each of the insertion holes 11 may include only the small-diameter portion P1 or only the large-diameter portion P3. Each of the insertion holes 11 does not need to include the diameter-increasing portion P2.

As shown in FIG. 1, the holding member 10 according to the embodiment further includes a mark 15 indicating a position of each of the plurality of insertion holes 11. The mark 15 is formed at at least one of the side wall surfaces 10c, 10d, 10e, and 10f of the wall surfaces of the holding member 10, and is not formed at the front wall surface 10a or the rear wall surface 10b. In the embodiment, the mark 15 is formed only at the side wall surface 10c of the holding member 10.

The mark 15 includes, for example, a plurality of grooves G and a plurality of through holes H. The plurality of grooves G are formed at the second surface S2 of the side wall surface 10c. As shown in FIG. 2, each of the plurality of grooves G is formed on an extension line of a respective one of the plurality of insertion holes 11 at the second surface S2. The plurality of grooves G are arranged to overlap the extension lines of the center axes C11 of the plurality of insertion holes 11, respectively, when the side wall surface 10c is viewed along the Z direction. That is, each of the grooves G is arranged on the extension line of the center axis C11 of a respective one of the insertion holes 11 when the side wall surface 10c is viewed. The grooves G are arranged in a single row along the Y direction to correspond to the respective insertion holes 11, and extend linearly along the X direction. Each of the grooves G is, for example, continuously formed along the X direction from the rear wall surface 10b to the wall surface 10g, and communicates with a respective one of the insertion holes 11 formed at the wall surface 10g.

A cross-sectional shape of each of the grooves G in the YZ plane perpendicular to the X direction is, for example, a semicircular shape. The cross-sectional shape of each of the grooves G may be, for example, a V-shape. An inner diameter of each of the grooves G is, for example, the same as the inner diameter of the large-diameter portion P3 of a respective one of the insertion holes 11, that is, an outer diameter of the coated portion 23 of the optical fiber 20. The inner diameter of the groove G may be a diameter of an inscribed circle inscribed in the inner surface of the semicircular groove G. When the side wall surface 10c is viewed along the X direction, a center axis C of each of the grooves G overlaps the center axis C11 of a respective one of the insertion holes 11. That is, the center axis C of each of the grooves G coincides with the extension line of the center axis C11 of the respective one of the insertion holes 11. As a result, the inner surface of each of the grooves G is smoothly connected to the inner surface of the respective one of the insertion holes 11 without a step. In a state where the coated portion 23 of the optical fiber 20 is placed in the groove G, the center axis C of the groove G coincides with the center axis C20 of the optical fiber 20. The state in which the coated portion 23 of the optical fiber 20 is placed in the groove G means a state in which an outer circumferential surface of the coated portion 23 is in contact with two inner surfaces forming the groove G.

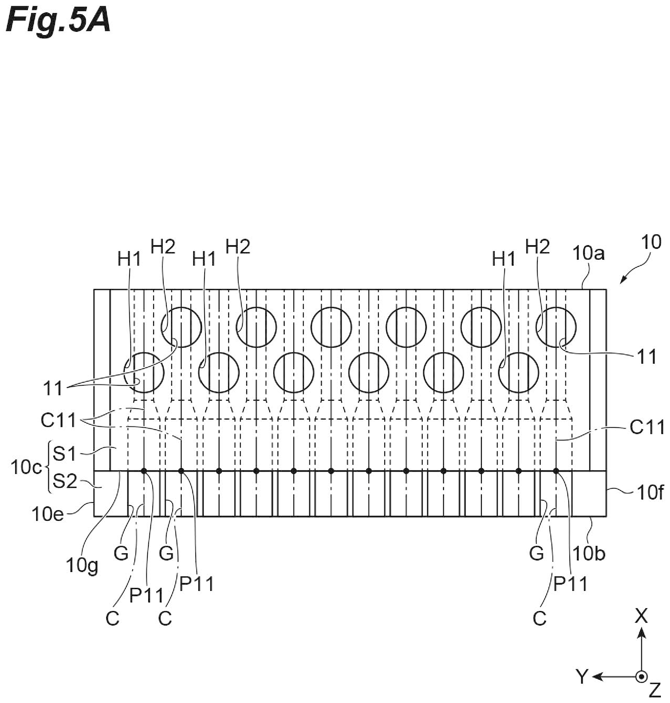

Each of the grooves G extends along the X direction in the second surface S2 and communicates with a respective one of the insertion holes 11 via the wall surface 10g. Thus, when the side wall surface 10c is viewed along the Z direction, a point where each of the grooves G and the wall surface 10g intersect can be detected as a starting point P11 (see FIG. 5A) of a respective one of the insertion holes 11. In the embodiment, since the extension line of the center axis C of each of the grooves G coincides with the center axis C11 of the respective one of the insertion holes 11, for example, an intersection point of the center axis C of each of the grooves G and the wall surface 10g may be set as the starting point P11 of the respective one of the insertion holes 11. As described above, by observing the side wall surface 10c, the position of each of the insertion holes 11 can be identified by using each of the grooves G. Thus, each of the grooves G functions as a mark indicating the position of a respective one of the insertion holes 11 when the side wall surface 10c is observed.

The plurality of through holes H are formed at the first surface S1 of the side wall surface 10c. Each of the through holes H is formed at a position aligned with the center axis C11 of a respective one of the insertion holes 11 along the Z direction at the first surface S1. Each of the through holes H is arranged to overlap a center axis C1 of a respective one of the insertion holes 11 when viewed along the Z direction. Each of the through holes H extends from the first surface S1 along the Z direction at a position overlapping the small-diameter portion P1 of a respective one of the insertion holes 11 in the Z direction, and communicates with the small-diameter portion P1 of the respective one of the insertion holes 11. The shape of each of the through holes H when viewed along the Z direction is, for example, a circular shape. The inner diameter of each of the through holes H is, for example, larger than the inner diameter of the small-diameter portion P1. Thus, the inner surface of the small-diameter portion P1 can be visually recognized from each of the through holes H. Each of the through holes H may be formed at a position overlapping the large-diameter portion P3 of the respective one of the insertion holes 11 in the Z direction, and may communicate with the large-diameter portion P3.

The plurality of through holes H are arranged in two rows to be staggered at the first surface S1, for example. The plurality of through holes H include, for example, a plurality of first through holes H1 and a plurality of second through holes H2. The plurality of first through holes H1 are arranged in a single row at intervals along the Y direction. The plurality of second through holes H2 are arranged in a single row at intervals along the Y direction such that the plurality of second through holes H2 are staggered with respect to the plurality of first through holes H1. That is, the second through holes H2 are arranged in a single row along the Y direction at positions shifted relative to the first through holes H1 in the X direction and not completely overlapping the first through holes H1 in the X direction.

Thus, when viewed along the X direction, a center axis C2 of each of the second through holes H2 is positioned between the center axes C1 and C1 of two first through holes H1 and H1 adjacent to each other in the Y direction. The center axis C1 is an axis passing through the center of the first through hole H1 and extends along the Z direction. The center axis C2 is an axis passing through the center of the second through hole H2 and extends along the Z direction. Each of the center axes C1 and C2 is arranged to overlap, for example, a respective one of the center axes C11 of the insertion holes 11 when the side wall surface 10c is viewed along the Z direction.

The inner surface of the insertion hole 11 can be directly visually recognized from each of the through holes H. The inner surface of the insertion hole 11 visible from each of the through holes H is shown as two straight lines in FIG. 2. A line connecting the centers of these two straight lines can be detected as the center axis C11 of the insertion hole 11. Thus, when the side wall surface 10c is viewed along the Z direction, for example, a point where the center axis C11 of each of the insertion holes 11 and the wall surface 10g intersect can be detected as the starting point P11 of each of the insertion holes 11 (see FIG. 5A). As described above, by observing the side wall surface 10c, the position of each of the insertion holes 11 can be identified by using each of the through holes H. Thus, each of the through holes H functions as a mark indicating the position of a respective one of the insertion holes 11 when the side wall surface 10c is observed.

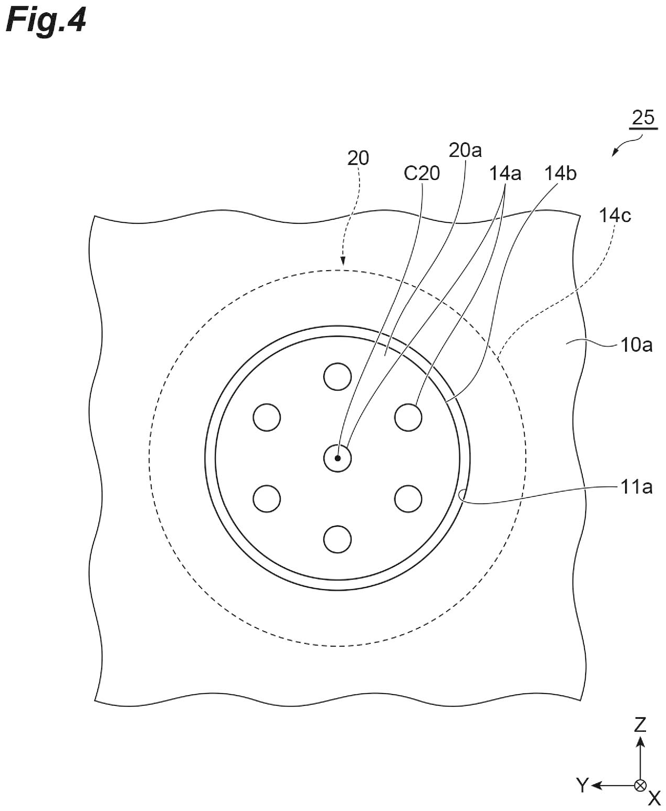

FIG. 3 is a plan view showing an optical fiber connection component 25 including the holding member 10. FIG. 4 is a front view showing an end surface of an optical fiber included in the optical fiber connection component 25. As shown in FIG. 3, the optical fiber connection component 25 includes, for example, the holding member 10 and the plurality of optical fibers 20. The plurality of optical fibers 20 are held by the holding member 10 in a state in which each of the plurality of optical fibers 20 is inserted into a respective one of the plurality of insertion holes 11 of the holding member 10. Each of the optical fibers 20 is, for example, an optical fiber that requires rotational alignment (that is, adjustment of the position around the center axis C20) in the holding member 10. Each of the optical fibers 20 is, for example, a multi core fiber (MCF). Each of the optical fibers 20 may be, for example, a polarization maintaining fiber (PMF).

As shown in FIG. 4, the optical fiber 20 includes a plurality of cores 14a, a cladding 14b covering the plurality of cores 14a, and a coating 14c surrounding the cladding 14b. At least one of the plurality of cores 14a is disposed in a region excluding the center axis C20, that is, a region shifted from the center axis C20. The center axis C20 is an axis passing through the center of the optical fiber 20 on the YZ plane orthogonal to the X direction of the optical fiber 20.

As shown in FIG. 3, the optical fiber 20 includes, for example, the coating-removed portion 22 and the coated portion 23. The coating-removed portion 22 is a portion of the optical fiber 20 where the coating 14c (see FIG. 4) is removed by a predetermined length from a distal end surface 20a of the optical fiber 20 to expose a surface of the cladding 14b. The coating-removed portion 22 includes, for example, the plurality of cores 14a and the cladding 14b. The coating-removed portion 22 is inserted into the small-diameter portion P1 and the diameter-increasing portion P2 of the insertion hole 11, and is fixed to the inner surface of the insertion hole 11 by a cured product of an adhesive injected into the insertion hole 11.

The coated portion 23 is a portion of the optical fiber 20 where the coating 14c remains. The coated portion 23 includes, for example, the plurality of cores 14a, the cladding 14b, and the coating 14c. The outer diameter of the coated portion 23 is larger than the outer diameter of the coating-removed portion 22 by a thickness of the coating 14c. The coated portion 23 is inserted into the large-diameter portion P3 of the insertion hole 11, and is fixed to the inner surface of the insertion hole 11 by a cured product of the adhesive injected into the insertion hole 11.

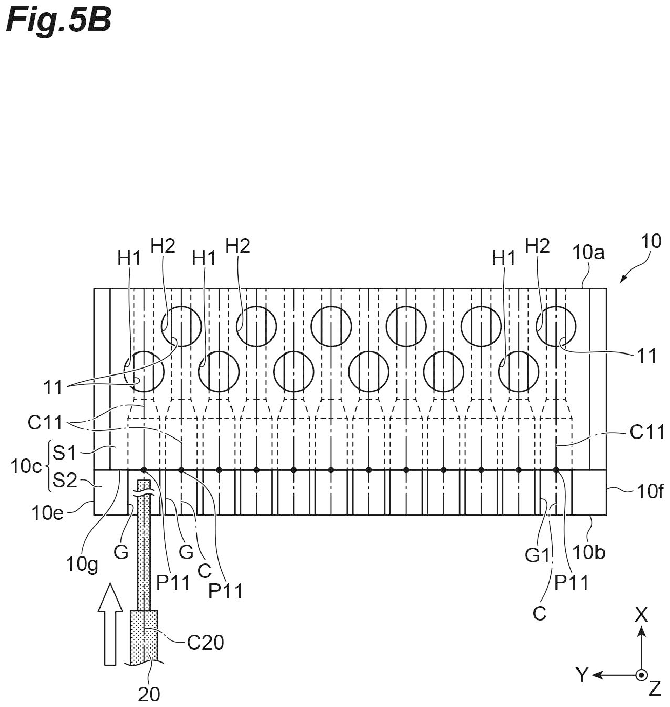

FIG. 5A and FIG. 5B are plan views each showing a manufacturing process of the optical fiber connection component 25. When the optical fiber connection component 25 is manufactured, as shown in FIG. 5A, first, the holding member 10 provided with the plurality of grooves G, the plurality of first through holes H1, and the plurality of second through holes H2 formed at the side wall surface 10c is prepared. Then, as shown in FIG. 5B, each of the plurality of optical fibers 20 is inserted into a respective one of the plurality of insertion holes 11 of the holding member 10 in the X direction.

When each of the optical fibers 20 is inserted into a respective one of the insertion holes 11 of the holding member 10, a jig for gripping each of the optical fibers 20 is disposed at a position facing the rear wall surface 10b, for example. Then, a camera for detecting each of the grooves G and each of the through holes H formed at the side wall surface 10c is disposed at a position facing the side wall surface 10c. In this manner, the camera is disposed in a direction different from the direction of the jig that grips each of the optical fibers 20, and is disposed so as not to interfere with the jig. Thereafter, by observing the side wall surface 10c through the camera, each of the grooves G and each of the through holes H formed at the side wall surface 10c are detected from an observation result (imaging result) of the side wall surface 10c. Then, based on a positional relationship between each of the grooves G and a respective one of the insertion holes 11 and a positional relationship between each of the through holes H and a respective one of the insertion holes 11, the position of each of the insertion holes 11 is identified by using each of the grooves G and each of the through holes H.

For example, from the observation result of the side wall surface 10c, the center axis C of each of the grooves G is detected, and the position of the intersection point of the center axis C and the wall surface 10g is detected as the position of the starting point P11 of each of the insertion holes 11 in the X direction and the Y direction. Further, from the observation result of the side wall surface 10c, the center axis C11 of each of the insertion holes 11 is detected through a respective one of the through holes H, and the position of the intersection point of the center axis C11 and the wall surface 10g is detected as the position of the starting point P11 of each of the insertion holes 11 in the X direction and the Y direction. As described above, when the plurality of grooves G and the plurality of through holes H are formed at the side wall surface 10c as marks, the position of the starting point P11 of each of the insertion holes 11 in the X direction and the Y direction can be detected by using any of the plurality of grooves G and the plurality of through holes H, and thus the position of the starting point P11 of each of the insertion holes 11 in the X direction and the Y direction can be accurately identified by using the position information of each of the insertion holes 11 obtained by using the plurality of grooves G and the position information of each of the insertion holes 11 obtained by using the plurality of through holes H. As a result, the position of each of the optical fibers 20 in the X direction and the Y direction can be precisely matched with the position of the starting point P11 of a respective one of the insertion holes 11 in the X direction and the Y direction, which is identified from the observation result of the side wall surface 10c.

Further, since the center axis C of each of the grooves G is located on the extension line of the center axis C11 of each of the insertion holes 11, the position of the center axis C of each of the grooves G in the Z direction coincides with the position of the center axis C11 of each of the insertion holes 11 in the Z direction. Thus, by placing each of the optical fibers 20 in each of the grooves G, the position of the center axis C20 of each of the optical fibers 20 in the Z direction can be precisely matched with the position of the center axis C11 of a respective one of the insertion holes 11 in the Z direction. As a result, the three-dimensional position (that is, the positions in the X direction, the Y direction, and the Z direction) of the center axis C20 of each of the optical fibers 20 can be precisely matched with the position of the center axis C11 of a respective one of the insertion holes 11.

In this manner, in a state where the position of each of the optical fibers 20 is aligned with a respective one of the insertion holes 11, by moving each of the optical fibers 20 along the X direction along a respective one of the grooves G toward the respective one of the insertion holes 11, each of the optical fibers 20 can be smoothly inserted into the respective one of the insertion holes 11. In a state where each of the optical fibers 20 is inserted into the respective one of the insertion holes 11, by injecting an adhesive into each of the insertion holes 11, the optical fiber connection component 25 in which each of the optical fibers 20 is held by the holding member 10 can be obtained. The insertion of each of the optical fibers 20 into the respective one of the insertion holes 11 may be performed manually by an operator.

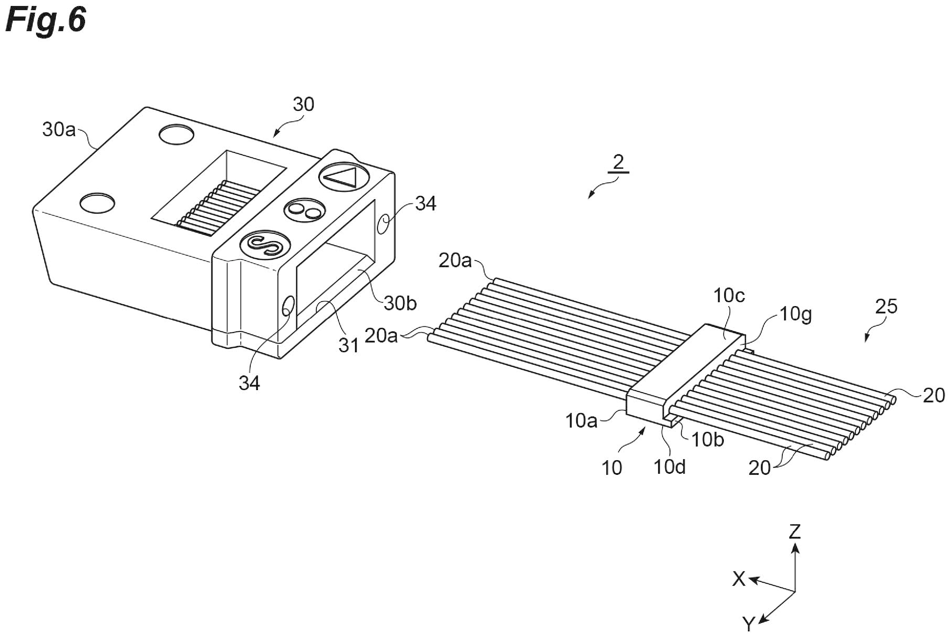

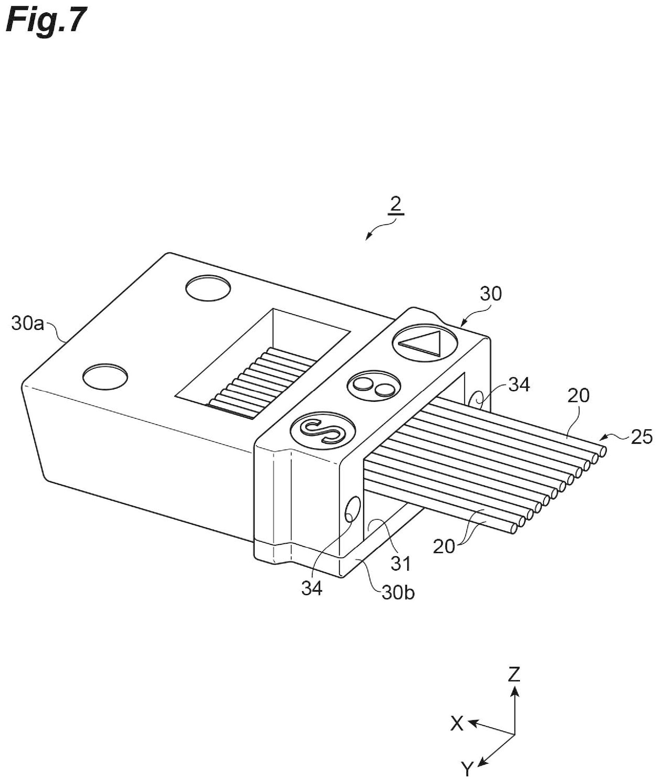

FIG. 6 is an exploded perspective view of an optical connector 2 including the optical fiber connection component 25. FIG. 7 is a perspective view of the optical connector 2. The optical connector 2 includes, for example, the optical fiber connection component 25 and a ferrule 30. As shown in FIG. 6 and FIG. 7, the ferrule 30 has, for example, a substantially rectangular parallelepiped appearance. The optical fiber connection component 25 is inserted into an inside of the ferrule 30 and fixed within the inside of the ferrule 30. The optical connector 2 may include, for example, two optical fiber connection components 25. In this case, the two optical fiber connection components 25 may be inserted into the ferrule 30 in a state in which the two optical fiber connection components 25 are stacked along the Z direction such that the side wall surfaces 10c of the two optical fiber connection components 25 face each other.

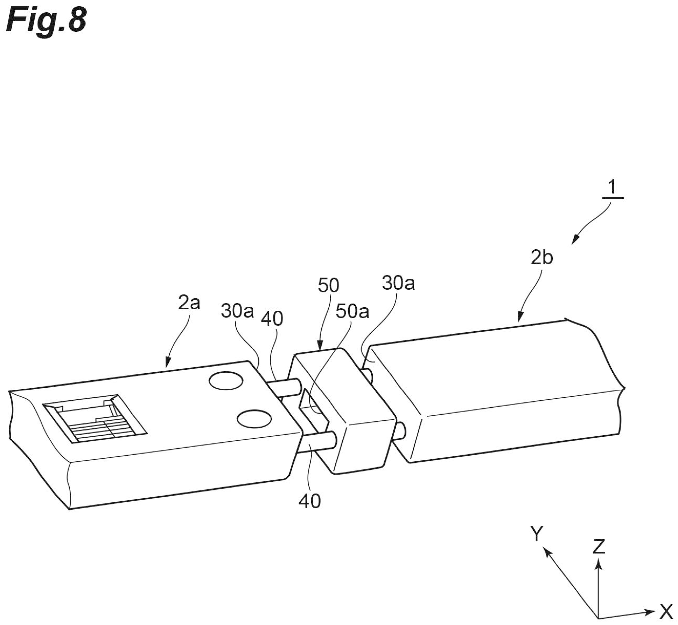

The ferrule 30 includes, for example, a front surface 30a and a rear surface 30b. The front surface 30a is an end surface located at a front end of the ferrule 30 along the X direction. The front surface 30a is slightly inclined with respect to the XZ plane, for example. The distal end surface 20a of each of the plurality of optical fibers 20 inserted into the inside of the ferrule 30 is exposed from the front surface 30a. The rear surface 30b is an end surface located at a rear end of the ferrule 30 along the X direction. The rear surface 30b is provided with an opening 31 capable of receiving the optical fiber connection component 25. Further, a pair of guiding through holes 34 into which a pair of guiding pins 40 (see FIG. 8) described below are respectively inserted are formed at the rear surface 30b. The pair of guiding through holes 34 penetrate the ferrule 30 from the front surface 30a to the rear surface 30b along the X direction, and are formed on both sides of the opening 31 along the Y direction.

FIG. 8 is a perspective view showing a connection assembly 1 including a first optical connector 2a and a second optical connector 2b, each as the optical connector 2. In the connection assembly 1, the front surface 30a of the first optical connector 2a and the front surface 30a of the second optical connector 2b face each other along the X direction with a gap therebetween. In this state, the pair of guiding pins 40 are fitted into the pair of guiding through holes 34 of the first optical connector 2a and the pair of guiding through holes 34 of the second optical connector 2b. As a result, the positions of the first optical connector 2a and the second optical connector 2b in the YZ plane are defined.

For example, a spacer 50 is disposed between the front surface 30a of the first optical connector 2a and the front surface 30a of the second optical connector 2b. The spacer 50 is a plate-like member having an opening 50a. The opening 50a allows a plurality of optical paths extending between the first optical connector 2a and the second optical connector 2b to pass therethrough. The spacer 50 abuts against the front surface 30a of the first optical connector 2a and the front surface 30a of the second optical connector 2b along the X direction, thereby defining a gap between the first optical connector 2a and the second optical connector 2b in the X direction.

The effects obtained by the holding member 10, the optical fiber connection component 25, the optical connector 2, the connection assembly 1, and the method for manufacturing the optical fiber connection component 25 according to the embodiment described above will be described.

When the optical fiber 20 is mounted to the holding member 10, it is conceivable to dispose a camera at a position facing the rear wall surface 10b of the holding member 10 in order to identify the position of the insertion hole 11 into which the optical fiber 20 is to be inserted. At the position facing the rear wall surface 10b, for example, an obstacle such as a hand of an operator or a jig gripping the optical fiber 20 is present. Thus, the camera cannot be disposed at the position facing the rear wall surface 10b because of such an obstacle. That is, the position of the insertion hole 11 cannot be directly observed from the rear wall surface 10b. From the viewpoint of avoiding the camera from interfering with the obstacle, it is conceivable to dispose the camera at a position obliquely facing with respect to the rear wall surface 10b. In this case, only a rough evaluation of the position of the insertion hole 11 can be made, and thus it is difficult to accurately identify the position of the insertion hole 11.

From the side wall surface 10c where no obstacle is present, the mark 15 indicating the position of each of the insertion holes 11 can be easily observed. Thus, in the embodiment, when the plurality of optical fibers 20 are mounted to the holding member 10, the position of each of the plurality of insertion holes 11 can be easily identified using the mark 15 by detecting the mark 15 from an observation result of the side wall surface 10c. As a result, the position of each of the optical fibers 20 can be precisely matched with the position of a respective one of the insertion holes 11, and thus each of the optical fibers 20 can be easily inserted into a respective one of the insertion holes 11. Thus, according to the holding member 10 of the embodiment, the optical fibers 20 can be easily mounted to the holding member 10.

As in the embodiment, the mark 15 may include the plurality of grooves G formed at the side wall surface 10c. In this case, from the observation result of the side wall surface 10c, the position of each of the insertion holes 11 can be easily identified based on the positional relationship between the plurality of grooves G and the plurality of insertion holes 11.

As in the embodiment, each of the plurality of grooves G may extend along the X direction on the extension line of the center axis C11 of the respective one of the plurality of insertion holes 11 and may communicate with the respective one of the plurality of insertion holes 11, and the plurality of grooves G may be arranged along the Y direction. In this case, from the observation result of the side wall surface 10c, the position of each of the insertion holes 11 in the X direction and the Y direction can be easily identified using a respective one of the grooves G formed at the side wall surface 10c. Thus, the position of each of the optical fibers 20 in the X direction and the Y direction can be aligned with the position of a respective one of the insertion holes 11 in the X direction and the Y direction. Further, by placing each of the optical fibers 20 in a respective one of the grooves G, the position of each of the optical fibers 20 in the Z direction can be aligned with the position of a respective one of the insertion holes 11 in the Z direction. As a result, the position of each of the optical fibers 20 can be precisely matched with the position of a respective one of the insertion holes 11 using the observation result of the side wall surface 10c, and thus each of the optical fibers 20 can be easily inserted into the respective one of the insertion holes 11. Further, since the posture of each of the optical fibers 20 can be adjusted by placing each of the optical fibers 20 along a respective one of the grooves G, each of the optical fibers 20 can be smoothly inserted into a respective one of the insertion holes 11.

As in the embodiment, the mark 15 may include the plurality of through holes H formed at the side wall surface 10c and each communicating with a respective one of the plurality of insertion holes 11. In this case, from the observation result of the side wall surface 10c, the position of each of the insertion holes 11 can be easily identified based on the positional relationship between the plurality of through holes H and the plurality of insertion holes 11.

As in the embodiment, the plurality of through holes H may be arranged along the Y direction such that each of the plurality of through holes H communicates with a respective one of the plurality of insertion holes 11. Each of the plurality of through holes H may be aligned with the center axis C11 of a respective one of the plurality of insertion holes 11 along the Z direction. In this case, from the observation result of the side wall surface 10c, the position of each of the insertion holes 11 in the X direction and the Y direction can be easily identified through a respective one of the through holes H formed at the side wall surface 10c. Thus, the position of each of the optical fibers 20 in the X direction and the Y direction can be precisely matched with the position of a respective one of the insertion holes 11 in the X direction and the Y direction, and thus each of the optical fibers 20 can be easily inserted into the respective one of the insertion holes 11. Further, in the case where the through holes H are individually formed with respect to the plurality of insertion holes 11 as in the embodiment, there is an advantage that the position of the center axis C11 of the insertion hole 11 is easily identified by using the positional relationship between the edge of the through hole H and the inner surface of the insertion hole 11 when the side wall surface 10c is viewed, as compared with the case where one through hole is formed with respect to the plurality of insertion holes 11.

As in the embodiment, the plurality of through holes H may include the plurality of first through holes H1 arranged in a single row along the Y direction, and the plurality of second through holes H2 arranged in a single row along the Y direction at positions shifted from the plurality of first through holes H1 in the X direction such that the plurality of second through holes H2 are staggered with respect to the plurality of first through holes H1. In this case, as compared with the case where all the through holes H are formed to be arranged in a single row along the Y direction, it is possible to avoid intervals between the through holes H from becoming excessively narrow, and thus it is possible to reduce the risk of a decrease in mechanical strength of wall portions between the through holes H decreases.

The holding member 10, the optical fiber connection component 25, the optical connector 2, the connection assembly 1, and the method for manufacturing the optical fiber connection component 25 of the present disclosure are not limited to the above-described embodiments, and may be modified without departing from the scope of the claims.

### <Modification 1>

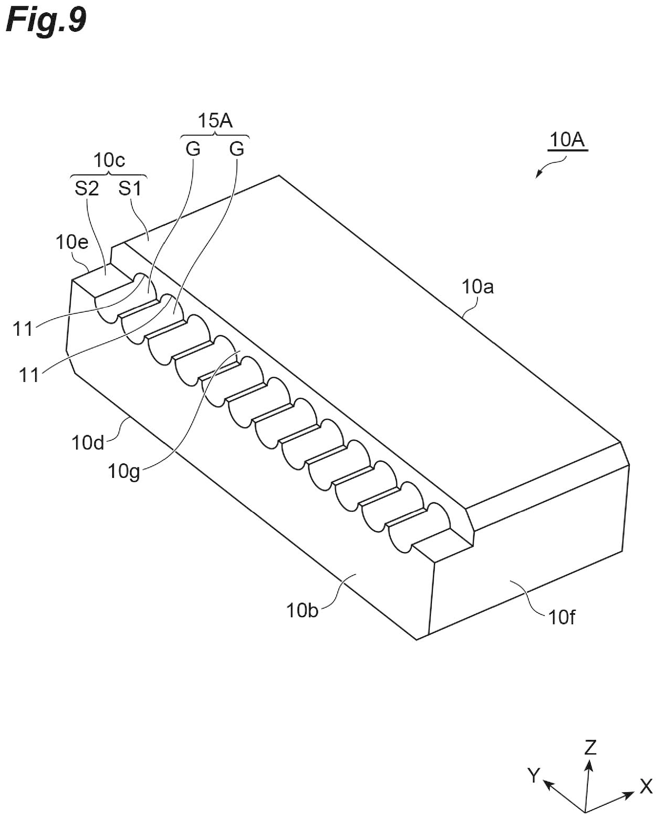

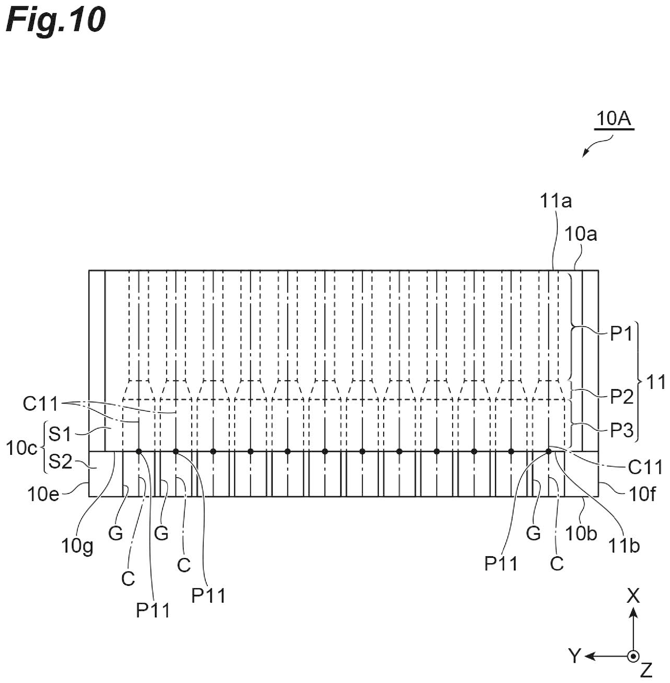

FIG. 9 is a perspective view showing a holding member 10A according to Modification 1. FIG. 10 is a plan view showing the holding member 10A. As shown in FIG. 9 and FIG. 10, the holding member 10 includes a mark 15A including only a plurality of grooves G. Thus, in the holding member 10A, the plurality of grooves G are formed as marks only at the second surface S2 of the side wall surface 10c, and no mark is formed at the first surface S1 of the side wall surface 10c. The holding member 10A has the same configuration as the holding member 10 according to the above-described embodiment except that the plurality of through holes H are not formed at the side wall surface 10c. Even in the holding member 10A, as described above, from the observation result of the side wall surface 10c, each of the optical fibers 20 can be easily inserted into a respective one of the insertion holes 11 using a respective one of the grooves G as a mark, and thus each of the optical fibers 20 can be easily mounted to the holding member 10A.

### <Modification 2>

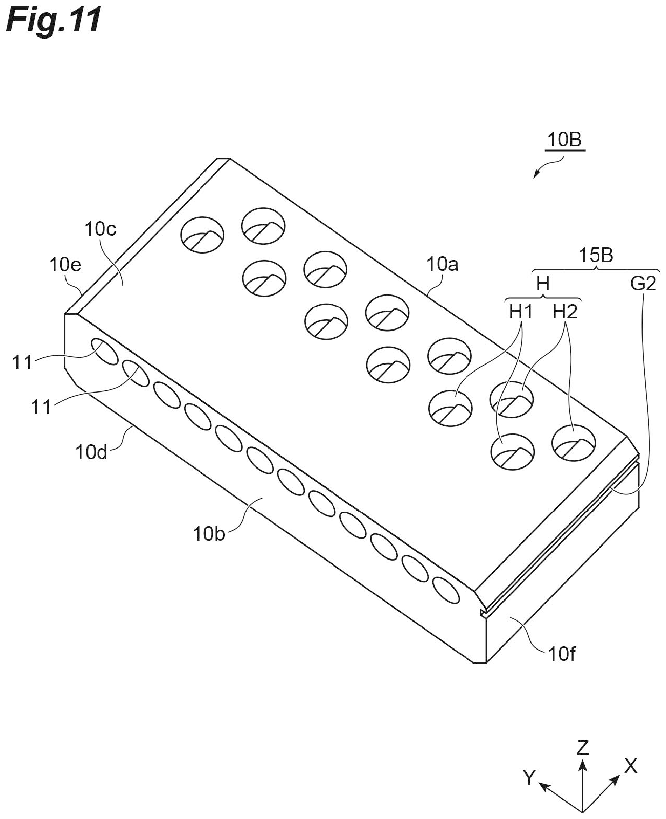

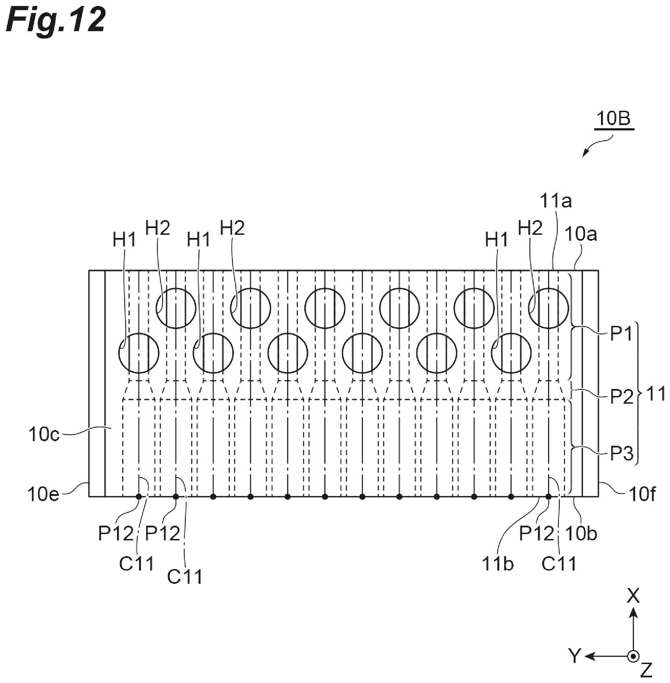

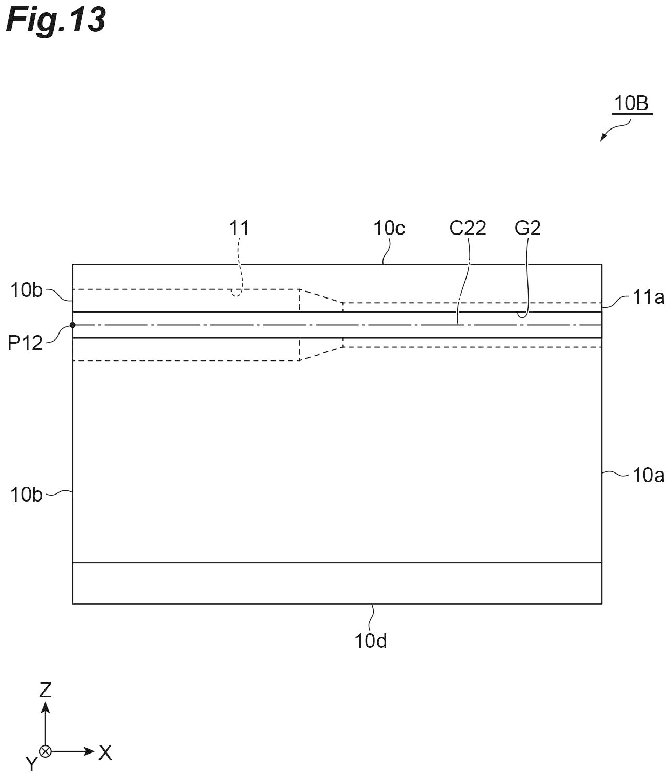

FIG. 11 is a perspective view showing a holding member 10B according to Modification 2. FIG. 12 is a plan view showing the holding member 10B. FIG. 13 is a side view of the holding member 10B. As shown in FIGS. 11 to 13, the holding member 10B includes a mark 15B including one second groove G2 instead of the plurality of grooves G. Further, the side wall surface 10c of the holding member 10B does not have a configuration corresponding to the second surface S2 described above, and continuously extends from the front wall surface 10a to the rear wall surface 10b along the X direction. Only the plurality of through holes H are formed at the side wall surface 10c. The one second groove G2 is formed at the side wall surface 10f. Thus, in the holding member 10B, the mark 15B is formed on each of the side wall surface 10c and the side wall surface 10f. That is, the mark 15B includes the plurality of through holes H (first mark) formed at the side wall surface 10c and the second groove G2 (second mark) formed at the side wall surface 10f.

As shown in FIGS. 11 and 13, the second groove G2 is formed at a position aligned with the center axis C11 of each of the insertion holes 11 along the Y direction at the side wall surface 10f. The second groove G2 extends linearly along the X direction from the rear wall surface 10b to the front wall surface 10a to overlap the center axis C11 of each of the insertion holes 11 when the side wall surface 10f is viewed along the Y direction. A cross-sectional shape of the second groove G2 in the YZ plane perpendicular to the X direction is, for example, a rectangular shape. The cross-sectional shape of the second groove G2 may be, for example, a circular shape or a V-shape. A width of the second groove G2 in the Z direction may be, for example, smaller than the inner diameter of the small-diameter portion P1 of each of the insertion holes 11, or may be larger than the inner diameter of the small-diameter portion P1 of each of the insertion holes 11. When the side wall surface 10f is viewed along the Y direction, a center axis C22 of the second groove G2 overlaps, for example, the center axis C11 of each of the insertion holes 11. The center axis C22 of the second groove G2 is an axis passing through the center of the width of the second groove G2 in the Z direction, and extends along the X direction.

As shown in FIG. 13, when the side wall surface 10f is viewed along the Y direction, the center axis C22 of the second groove G2 overlaps the center axis C11 of each of the insertion holes 11. Thus, the position of the center axis C22 of the second groove G2 when the side wall surface 10f is viewed can be detected as the position of the center axis C11 of each of the insertion holes 11. Further, a point where the center axis C22 of the second groove G2 and the rear wall surface 10b intersect can be detected as a starting point P12 of each of the insertion holes 11. As described above, by observing the side wall surface 10f, the position of each of the insertion holes 11 can be identified using the second groove G2. Thus, the second groove G2 functions as a mark indicating the position of each of the insertion holes 11 when the side wall surface 10f is observed.

When each of the optical fibers 20 is inserted into a respective one of the insertion holes 11 of the holding member 10B, cameras are disposed at positions facing the side wall surface 10c and the side wall surface 10f, respectively. From the observation result of the side wall surface 10c, as described above, the position of the starting point P12 of each of the insertion holes 11 in the X direction and the Y direction can be detected using each of the through holes H formed at the side wall surface 10c. Further, from the observation result of the side wall surface 10f, the position of the starting point P12 of each of the insertion holes 11 in the X direction and the Z direction can be detected using the second groove G2 formed at the side wall surface 10f. Thus, by observing both the side wall surface 10c and the side wall surface 10f, the three-dimensional position of the starting point P12 of each of the insertion holes 11 can be identified with high accuracy. As a result, the position of each of the optical fibers 20 can be precisely matched with the position of a respective one of the identified insertion holes 11, and thus each of the optical fibers 20 can be easily inserted into the respective one of the insertion holes 11.

### <Modification 3>

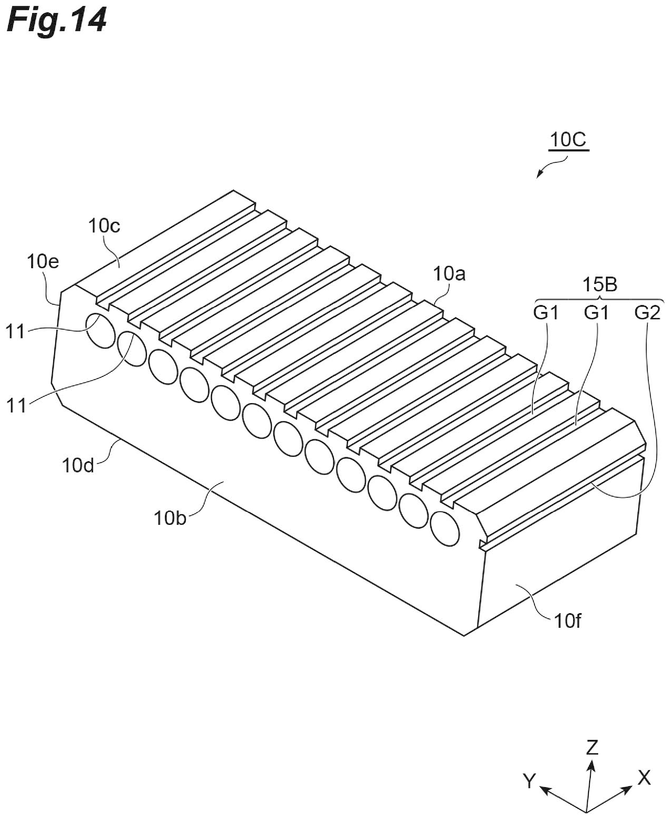

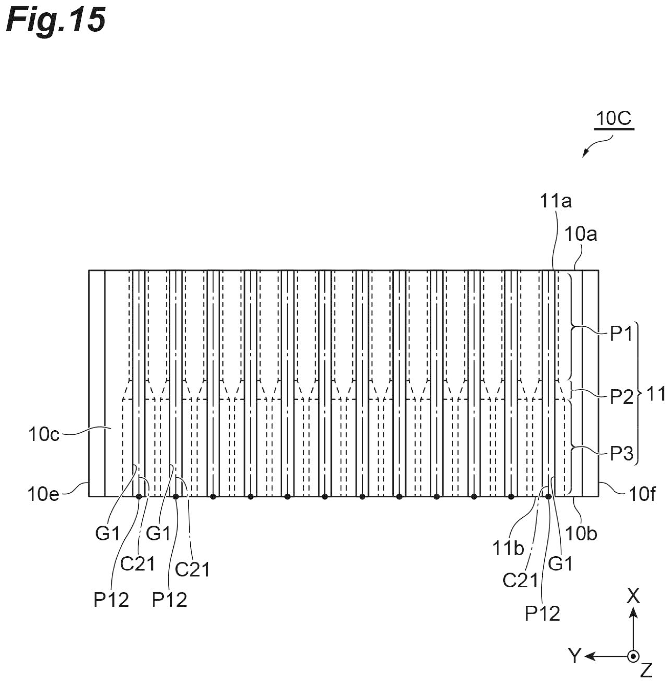

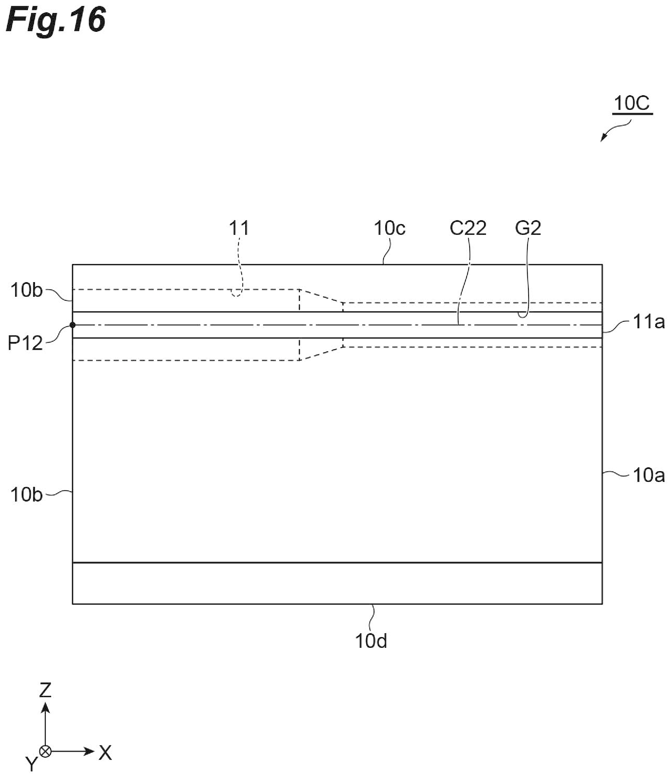

FIG. 14 is a perspective view showing a holding member 10C according to Modification 2. FIG. 15 is a plan view showing the holding member 10C. FIG. 16 is a side view of the holding member 10C. As shown in FIGS. 14 to 16, the holding member 10C includes a mark 15C including a plurality of first grooves G1 and one second groove G2 instead of the plurality of grooves G. Further, the side wall surface 10c of the holding member 10C does not have a configuration corresponding to the second surface S2 described above, and continuously extends from the front wall surface 10a to the rear wall surface 10b along the X direction. The plurality of first grooves G1 are formed at the side wall surface 10c, and the one second groove G2 is formed at the side wall surface 10f. Thus, in the holding member 10C, the mark 15C is formed at each of the side wall surface 10c and the side wall surface 10f. That is, the mark 15C includes the plurality of first grooves G1 (first mark) formed at the side wall surface 10c and the second groove G2 (second mark) formed at the side wall surface 10f.

As shown in FIG. 14 and FIG. 15, each of the plurality of first grooves G1 is formed at a position aligned with the center axis C11 of a respective one of the plurality of insertion holes 11 along the Z direction at the side wall surface 10c. The plurality of first grooves G1 are arranged to overlap the center axes C11 of the plurality of insertion holes 11, respectively, when the side wall surface 10c is viewed along the Z direction. Thus, the first grooves G1 are arranged in a single row along the Y direction to correspond to the respective insertion holes 11, and extend linearly along the X direction. Each of the first grooves G1 is, for example, formed contiguously from the rear wall surface 10b to the front wall surface 10a at the side wall surface 10c.

A cross-sectional shape of each of the first grooves G1 in the YZ plane perpendicular to the X direction is, for example, a rectangular shape. A cross-sectional shape of each of the second grooves G2 may be, for example, a circular shape or a V-shape. A width of each of the first grooves G1 in the Y direction may be, for example, smaller than the inner diameter of the small-diameter portion P1 of a respective one of the insertion holes 11, or may be larger than the inner diameter of the small-diameter portion P1 of the respective one of the insertion holes 11. When the side wall surface 10c is viewed along the Z direction, a center axis C21 of each of the first grooves G1 overlaps, for example, the center axis C11 of a respective one of the insertion holes 11. The center axis C21 of each of the first grooves G1 is an axis passing through the center of the width of the first groove G1 in the Y direction, and extends along the X direction.

As shown in FIG. 15, when the side wall surface 10c is viewed along the Z direction, the center axis C21 of each of the first grooves G1 overlaps the center axis C11 of a respective one of the insertion holes 11. Thus, the position of the center axis C21 of each of the first grooves G1 when the side wall surface 10c is viewed can be detected as the position of the center axis C11 of a respective one of the insertion holes 11. Further, a point where the center axis C21 of each of the first grooves G1 and the rear wall surface 10b intersect can be detected as the starting point P12 of a respective one of the insertion holes 11. As described above, by observing the side wall surface 10c, the position of each of the insertion holes 11 can be identified using a respective one of the first grooves G1. Thus, each of the first grooves G1 functions as a mark indicating the position of a respective one of the insertion holes 11 when the side wall surface 10c is observed.

As shown in FIGS. 14 and 16, the second groove G2 is formed at a position aligned with the center axis C11 of each of the insertion holes 11 along the Y direction at the side wall surface 10f. The second groove G2 extends linearly along the X direction from the rear wall surface 10b to the front wall surface 10a to overlap the center axis C11 of each of the insertion holes 11 when the side wall surface 10f is viewed along the Y direction. The cross-sectional shape of the second groove G2 in the YZ plane perpendicular to the X direction is, for example, a rectangular shape. The cross-sectional shape of the second groove G2 may be, for example, a circular shape or a V-shape. The width of the second groove G2 in the Z direction may be, for example, smaller than the inner diameter of the small-diameter portion P1 of each of the insertion holes 11, or may be larger than the inner diameter of the small-diameter portion P1 of each of the insertion holes 11. The width of the second groove G2 in the Z direction may be, for example, the same as the width of each of the first grooves G1 in the Y direction. When the side wall surface 10f is viewed along the Y direction, the center axis C22 of the second groove G2 overlaps, for example, the center axis C11 of each of the insertion holes 11. The center axis C22 of the second groove G2 is the axis passing through the center of the width of the second groove G2 in the Z direction, and extends along the X direction.

As shown in FIG. 13, when the side wall surface 10f is viewed along the Y direction, the center axis C22 of the second groove G2 overlaps the center axis C11 of each of the insertion holes 11. Thus, the position of the center axis C22 of the second groove G2 when the side wall surface 10f is viewed can be detected as the position of the center axis C11 of each of the insertion holes 11. Further, the point where the center axis C22 of the second groove G2 and the rear wall surface 10b intersect can be detected as the starting point P12 of each of the insertion holes 11. As described above, by observing the side wall surface 10f, the position of each of the insertion holes 11 can be identified using the second groove G2. Thus, the second groove G2 functions as a mark indicating the position of each of the insertion holes 11 when the side wall surface 10f is observed.

When each of the optical fibers 20 is inserted into a respective one of the insertion holes 11 of the holding member 10C, cameras are disposed at positions facing the side wall surface 10c and the side wall surface 10f, respectively. From the observation result of the side wall surface 10c, as described above, the position of the starting point P12 of each of the insertion holes 11 in the X direction and the Y direction can be detected using each of the first grooves G1 formed at the side wall surface 10c. Further, from the observation result of the side wall surface 10f, the position of the starting point P12 of each of the insertion holes 11 in the X direction and the Z direction can be detected using the second groove G2 formed at the side wall surface 10f. Thus, by observing both the side wall surface 10c and the side wall surface 10f, the three-dimensional position of the starting point P12 of each of the insertion holes 11 can be identified with high accuracy. As a result, the position of each of the optical fibers 20 can be precisely matched with the position of a respective one of the identified insertion holes 11, and thus each of the optical fibers 20 can be easily inserted into the respective one of the insertion holes 11.

The present disclosure is not limited to the above embodiments and modifications, and various modifications are possible. For example, the above embodiments and modifications may be combined with each other to the extent that no contradiction is present, depending on the required purpose and effect. In the above-described embodiment, the case where the mark 15 includes the plurality of grooves G and the plurality of through holes H has been described. However, the mark may include one through hole instead of the plurality of through holes. In this case, one through hole may be formed to overlap all the insertion holes in the Z direction on the side wall surface of the holding member, and may communicate with all the insertion holes.

The mark may include, for example, a mark of a protrusion, a refractive-index-change portion, a color-change portion, or a transparent portion, instead of the groove or the through hole. Thus, each of the first mark and the second mark may be any of a groove, a through hole, a protrusion, a refractive-index-change portion, a color-change portion, and a transparent portion. The combination of the first mark and the second mark may be any two selected from a groove, a through hole, a protrusion, a refractive-index-change portion, a color-change portion, and a transparent portion. The protrusion may be a portion protruding from the side wall surface of the holding member. The refractive-index-change portion may be a portion formed of a material having a refractive index different from that of the other portions. In this case, the refractive-index-change portion can be identified from the side wall surface of the holding member by using a difference in refractive index. The color-change portion may be a portion formed of a material having a color different from that of the other portions. In this case, the color-change portion can be identified from the side wall surface of the holding member by using a difference in color. The transparent portion may be a portion made of a transparent material. "Transparent" refers to, for example, a property in which a transmittance of visible light (for example, having a wavelength of 380 nm to 780 nm) for a transparent portion having a thickness of 3 mm is 30%. Examples of the transparent material include quartz glass, quartz, polycarbonate, and acrylic.

In the above embodiment, the case where the mark 15 is formed at the side wall surface 10c of the holding member 10 has been described. However, the mark may be formed at at least one side wall surface of the four side wall surfaces 10c, 10d, 10e, and 10f of the holding member 10. For example, the mark may be formed on another side wall surface such as the side wall surface 10d or the side wall surface 10e of the holding member 10. In the above embodiment, the case where the center axis C of each of the grooves G included in the mark 15 coincides with the center axis C11 of a respective one of the insertion holes 11 when the side wall surface 10c is viewed has been described. However, the center axis C of each of the grooves G does not necessarily have to coincide with the center axis C11 of a respective one of the insertion holes 11. Similarly, when the side wall surface 10c is viewed, the center axis C1 or C2 of each of the through holes H included in the mark 15 does not necessarily have to coincide with a respective one of the center axes C11 of the insertion holes 11.

### REFERENCE SIGNS LIST

1 connection assembly
2 optical connector
2a first optical connector
2b second optical connector
10, 10A, 10B, 10C holding member
10a front wall surface
10b rear wall surface
10c side wall surface (first side wall surface)
10f side wall surface (second side wall surface)
10d, 10e side wall surface
10g wall surface
11 insertion hole
11a, 11b, 31, 50a opening
14a core
14b cladding
14c coating
15, 15A, 15B, 15C mark
20 optical fiber
20a distal end surface
22 coating-removed portion
23 coated portion
25 optical fiber connection component
30 ferrule
30a front surface
30b rear surface
34 guiding through hole
40 guiding pin
50 spacer
C, C1, C2, C11, C20, C21, C22 center axis
G groove
G1 first groove (first mark)
G2 second groove (second mark)
H through hole (first mark)
H1 first through hole
H2 second through hole
S1 first surface
S2 second surface
P1 small-diameter portion
P2 diameter-increasing portion
P3 large-diameter portion
P11, P12 starting point

## Claims

1. A holding member configured to be disposed, in a state of holding a plurality of optical fibers, inside an optical connector ferrule, the holding member comprising:
a front wall surface;
a rear wall surface aligned with the front wall surface along a first direction intersecting the front wall surface;
a plurality of insertion holes extending along the first direction between the front wall surface and the rear wall surface and arranged along a second direction intersecting the first direction such that each of the plurality of optical fibers is insertable into a respective one of the plurality of insertion holes;
a first side wall surface positioned between the front wall surface and the rear wall surface and intersecting a third direction, the third direction intersecting both the first direction and the second direction;
a second side wall surface positioned between the front wall surface and the rear wall surface and intersecting the second direction; and
at least one mark formed at at least one of the first side wall surface and the second side wall surface and configured to indicate the position of each of the plurality of insertion holes.

2. The holding member according to claim 1,
wherein the at least one mark includes a first mark formed at the first side wall surface and a second mark formed at the second side wall surface.

3. The holding member according to claim 1 or claim 2,
wherein the at least one mark includes one or a plurality of grooves formed at at least one of the first side wall surface or the second side wall surface.

4. The holding member according to claim 3,
wherein the first side wall surface includes
a first surface connected to the front wall surface, and
a second surface connecting the first surface and the rear wall surface to each other and forming a recess at the first side wall surface,
wherein the plurality of insertion holes extend along the first direction from a wall surface connecting the first surface and the second surface to each other to the rear wall surface,
wherein the plurality of grooves are formed at the second surface, and
wherein each of the plurality of grooves extends along the first direction on an extension line of the respective one of the plurality of insertion holes and communicates with the respective one of the plurality of insertion holes, the plurality of grooves being arranged along the second direction.

5. The holding member according to claim 3,
wherein the plurality of grooves include a plurality of first grooves formed at the first side wall surface, and
wherein each of the plurality of first grooves extends along the first direction to be aligned with a center axis of a respective one of the plurality of insertion holes along the third direction, the plurality of first grooves being arranged along the second direction.

6. The holding member according to any one of claim 3 to claim 5,
wherein the plurality of grooves include one second groove formed at the second side wall surface, and
wherein the second groove extends along the first direction to be aligned with a center axis of each of the plurality of insertion holes along the second direction.

7. The holding member according to any one of claim 1 to claim 6,
wherein the at least one mark includes one or a plurality of through holes formed at at least one of the first side wall surface or the second side wall surface and communicating with the plurality of insertion holes.

8. The holding member according to claim 7,
wherein the plurality of through holes are formed at the first side wall surface and are arranged along the second direction such that each of the plurality of through holes communicates with a respective one of the plurality of insertion holes, and
wherein each of the plurality of through holes is aligned with a center axis of a respective one of the plurality of insertion holes along the third direction.

9. The holding member according to claim 8,
wherein the plurality of through holes include
a plurality of first through holes arranged in a single row along the second direction, and
a plurality of second through holes arranged in a single row along the second direction at positions shifted from the plurality of first through holes in the first direction such that the plurality of second through holes are staggered with respect to the plurality of first through holes.

10. An optical fiber connection component comprising:
the holding member according to any one of claim 1 to claim 9; and
the plurality of optical fibers each of which is inserted into a respective one of the plurality of insertion holes.

11. An optical connector comprising:
the optical fiber connection component according to claim 10; and
the optical connector ferrule into which the optical fiber connection component is inserted.

12. A connection assembly comprising:
a first optical connector and a second optical connector, each as the optical connector according to claim 11,
wherein the first optical connector and the second optical connector are arranged to face each other along the first direction.

13. A method for manufacturing the optical fiber connection component according to claim 10, the method comprising:
identifying a position of each of the plurality of insertion holes by observing at least one of the first side wall surface or the second side wall surface of the holding member and by using the at least one mark; and
inserting each of the plurality of optical fibers into a respective one of the plurality of insertion holes based on an identified position of each of the plurality of insertion holes.
